# EUROPEAN PATENT APPLICATION

(11) **EP 4 717 061 A1**
(43) Date of publication of application: **01.04.2026**
(21) Application number: 25202050.8
(22) Date of filing: 15.09.2025
(51) Int. Cl.: A01B 69/04, A01B 79/00

(54) **CONTROLLING THE OPERATION OF AN AGRICULTURAL IMPLEMENT OF AN AGRICULTURAL VEHICLE**

(30) Priority: 26.09.2024 US 202463699287 P
(71) Applicant: Agco Corporation, Duluth, Georgia 30096 (US)
(72) Inventor: ROBILLARD, Jerome Matthieu, Jackson, 56143 (US); MURRAY, Timothy Allen, Jackson, 56143 (US)
(74) Representative: AGCO Intellectual Property Department

(57) **Abstract**

A mechanism for controlling the operation of an agricultural implement of an agricultural vehicle. Image data of an agricultural region is processed to identify a plurality of subregions and a respective indicator of plant population in each subregion. The geographic location of the agricultural vehicle is tracked and, when the geographic location overlaps an identified subregion, the operation of the agricultural vehicle is controlled responsive to the corresponding indicator of plant population.

## Description

### CROSS-REFERENCE TO RELATED APPLICATIONS

N/A.

### FIELD

Embodiments of the present disclosure relate to agricultural vehicles, and in particular to the control of agricultural implements of agricultural vehicles.

### BACKGROUND

With ever-increasing population numbers and an ongoing interest in more environmentally friendly farming practices, there is a desire to improve the efficiency of performing agricultural processes. Examples of agricultural processes include ploughing, tilling, planting, spraying, fertilizing, harvesting and so on. Each of these activities plays a distinct role in the overall agricultural production cycle and their efficiency directly impacts the productivity and sustainability of farming operations.

During the performance of an agricultural process using an agricultural vehicle, there are a large number of decisions and actions that an operator of the agricultural vehicle needs to perform. In particular, they will need to control the operation of one or more agricultural implements to perform the agricultural process(es). This can create a significant burden upon the operator, and places significant reliance upon the expertise and judgment of the operator to achieve successful outcomes.

There is an ongoing desire to improve the performance of an agricultural process, e.g., with the aim of achieving higher yields, reduced crop loss and/or improved crop quality. Other desirable aims for the outcome of agricultural processes will be apparent.

### BRIEF SUMMARY

According to examples in accordance with this disclosure, there is provided an agricultural system comprising: an agricultural vehicle having an agricultural implement configured to perform an agricultural task within an interaction zone in the vicinity of the agricultural vehicle; a vehicle tracking system configured to track a geographic location of the agricultural vehicle; and a control system configured to: receive image data of an agricultural region to undergo an agricultural task; process the image data to determine, for each of a plurality of subregions of the agricultural region, a respective indicator of plant population in said subregion; identify, as an active subregion, in which, if any, of the plurality of subregions the tracked geographic location of the agricultural vehicle lies; and if an active subregion is identified, control the operation of the agricultural implement responsive to the respective indicator of plant population for the active subregion.

*This proposed approach provides an automated mechanism for location-specific control of agricultural operations based on plant population data in said location. By controlling the functionality of the agricultural implement (and therefore the corresponding agricultural task) responsive to detected plant populations, the agricultural task can be performed more efficiently and effectively, with reduced resource wastage.*

*For instance, where the agricultural implement expends one or more resources (e.g., crop seed*/*plants, fertilizer, pesticides and so on) in performing the agricultural task, then controlling the operation of the agricultural implement can adapt the expenditure of the resource(s) responsive to plant population. This can advantageously reduce resource wastage.*

*In particular, the proposed approach allows for adaptive performance of agricultural tasks in real-time as the vehicle moves through different subregions.*

*The proposed approach advantageously facilitates determination of how to control the agricultural implement in advance of performing the agricultural task within the agricultural region. This can allow for appropriate agricultural planning and configuration of the agricultural vehicle for more efficient performance of the agricultural task. For instance, it is possible to plan an amount of resource to be carried by the agricultural vehicle, a route to be taken by the agricultural vehicle and*/*or for times and*/*or locations for replenishing any resource(s) carried by the agricultural vehicle.*

*The proposed approach functions to reduce the workload on an operator of the agricultural vehicle and minimize the risk of human error. This leads to more consistent and optimized agricultural operations across large agricultural regions, improving overall crop management and yield outcomes.*

In some embodiments, the image data comprises satellite imaging data and/or aerial photography data. *Using satellite imaging data and*/*or aerial photography data provides comprehensive and consistent data that covers large agricultural areas, allowing for detailed, precise and reliable analysis of plant populations across the agricultural region.*

In some embodiments, the control system is configured to, if an active subregion is identified, control whether or not the agricultural implement is activated responsive to the respective indicator of plant population for the active subregion.

*This approach enables selective activation of the implement, functioning to conserve resources and reduce a risk of performing potentially unnecessary agricultural operations in areas with sufficient plant population. In other words, this approach provides a more efficient use of resources by activating the agricultural implement only in areas where it is needed, based on the indicator of plant population in the active subregion. This also help to reduce a risk of unnecessary disturbance or treatment of subregions with sufficient plant density, reducing environmental impact, preserving soil health and reducing a risk of plant*/*crop damage in those regions.*

In some embodiments, the control system is configured to, if an active subregion is identified: activate the agricultural implement responsive to the indicator of plant population for the active subregion indicating that the plant population in the active subregion is below a first threshold population; and deactivate the agricultural implement responsive to the indicator of plant population for the active subregion indicating that the plant population in the active subregion is above the first threshold population.

*This approach enhances the resource-conservation advantages previously outlined. In particular, by making use of a threshold, this approach helps conserve resources used by the agricultural implement for performing an agricultural task (e.g., seeds, plants, fertilizers and*/*or pesticides) by applying them only where needed, reducing resource usage. This approach also facilitates more uniform crop development across the field by addressing areas of low plant density, e.g., rather than treating all areas equally, which could lead to improved overall yield and crop quality at harvest time.*

In some embodiments, each indicator of plant population is a measure of predicted plant density in the respective subregion. *Using plant density as an indicator provides a quantifiable metric for assessing plant population and making operational decisions. This approach also facilitates the performance of more granular control over the operation of the agricultural implement and*/*or the agricultural task.*

In some embodiments, the control system is configured to process the image data using a machine-learning method to determine, for each of the plurality of subregions of the agricultural region, the respective indicator of plant population in said subregion. *The use of a machine-learning method to perform the processing of the digital image provides an accurate and reliable mechanism for generating the indicator of plant population.*

In some embodiments, the agricultural implement is a planter configured to plant crop. *It has been recognized that proposed approaches are particularly advantageous when exploited to control whether and*/*or how much crop is planted responsive to plant population, e.g., to reduce a risk of overplanting and*/*or to address barren or unsuccessful regions.*

In some embodiments, the control system is configured to control, if an active subregion is identified and the agricultural implement is activated, a rate of crop planting performed by the agricultural implement responsive to the indicator of plant population in the active subregion, wherein the rate of crop planting is non-zero. *This approach facilitates dynamic adjustment of planting rates, e.g., to improve crop density responsive to existing plant populations and*/*or prevent or reduce a risk of overcrowding.*

In some embodiments, the control system is configured to control, if an active subregion is identified: the rate of crop planting performed by the agricultural implement to be greater when to the indicator of plant population for the active subregion indicates a lower plant population than when the indicator of plant population for the active subregion indicates a higher plant population.

*This inverse relationship between planting rate and existing plant population helps achieve more uniform overall crop density across the field, reducing a risk of overcrowding and increasing a likelihood that crop will grow and mature simultaneously or near-simultaneously.*

In some embodiments, the control system is configured to control, if an active subregion is identified, the position at which the crop is planted with respect to the agricultural vehicle responsive to the indicator of plant population for the active subregion. *This capability allows for precise positioning of newly planted crops in relation to existing plants, facilitating improved resource utilization, crop spacing and reducing damage to healthy crops within the interaction zone.*

In some embodiments, the control system is configured to, if an active subregion is identified and the agricultural implement is activated: plant the crop along one or more first predetermined lines defined with respect to the agricultural vehicle responsive to the indicator of plant population for the active subregion indicating that the plant population in the active subregion is below a second threshold population; and plant the crop at one or more second predetermined lines defined with respect to the agricultural vehicle responsive to the indicator of plant population for the active subregion indicating that the plant population in the active subregion is above a second threshold population, wherein each second predetermined line is offset from each first predetermined line.

In some embodiments, each first predetermined line is a line along which existing crop was planted. *This facilitates interplanting or gap-filling in existing crop rows to reduce a risk of damaging existing or healthy crop within the target region*

In some embodiments, the vehicle tracking system comprises a satellite-based geographic positioning system comprising at least one tracking element mounted to the agricultural vehicle. *Such approaches provide highly accurate and real-time location data, to thereby increase a likelihood that the controlled action of the agricultural implement correctly reflects the plant population at the true location of the agricultural vehicle.*

In some embodiments, the plant population is a crop population. *Focusing on crop population allows for more targeted and efficient agricultural operations. By specifically monitoring and responding to crop population, the system is able to perform more appropriate control over the operation of the agricultural implement in performing the agricultural task.*

According to examples in accordance with this disclosure, there is provided a method for controlling an agricultural implement, of an agricultural vehicle, configured to perform an agricultural task within an interaction zone in the vicinity of the agricultural vehicle, the method comprising: tracking a geographic location of the agricultural vehicle; receiving image data of an agricultural region to undergo an agricultural task; processing the image data to determine, for each of a plurality of subregions of the agricultural region, a respective indicator of plant population in said subregion; identifying, as an active subregion, which, if any, of the plurality of subregions the tracked geographic location of the agricultural vehicle lies; and if an active subregion is identified, controlling the operation of the agricultural implement responsive to the respective indicator of plant population for the active subregion.

The method may be adapted to carry out the functions of any herein proposed agricultural system and vice versa.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates an agricultural vehicle;
FIG. 2 provides another view of the agricultural vehicle;
FIG. 3 illustrates a proposed method;
FIG. 4 illustrates a planter for use in proposed embodiments; and
FIG. 5 illustrates a proposed approach.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for controlling the operation of an agricultural implement of an agricultural vehicle. Image data of an agricultural region is processed to identify a plurality of subregions and a respective indicator of plant population in each subregion. The geographic location of the agricultural vehicle is tracked and, when the geographic location overlaps an identified subregion, the operation of the agricultural vehicle is controlled responsive to the corresponding indicator of plant population.

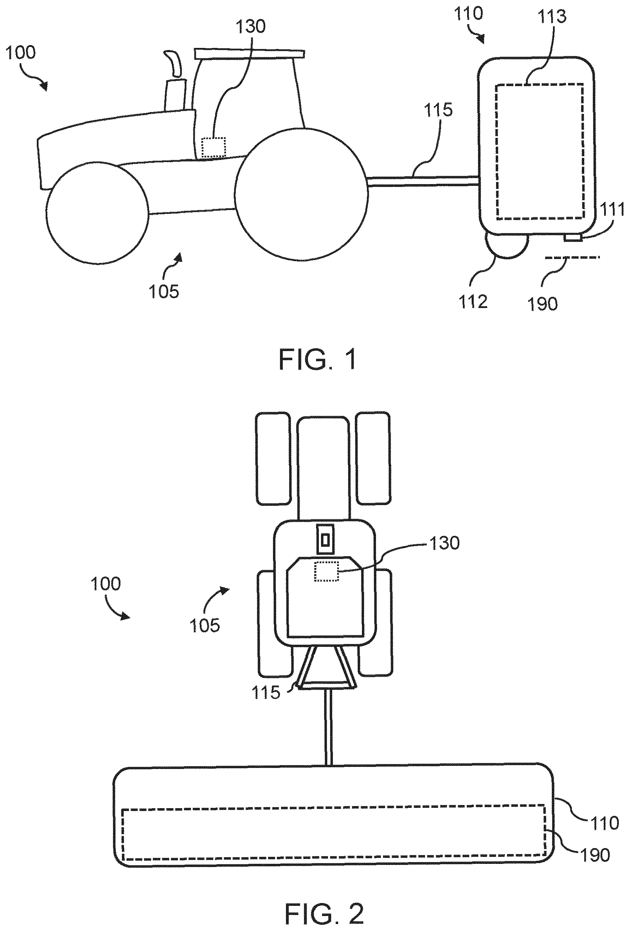

FIGS. 1 and 2 schematically illustrate an agricultural vehicle 100 for use in a proposed agricultural system. FIG. 1 provides a side view of the agricultural vehicle. FIG. 2 provides a top-down view of the agricultural vehicle. The illustrated example of an agricultural vehicle 100 takes the form of a tractor towing a trailer carrying agricultural machinery.

The agricultural vehicle 100 comprises an agricultural implement 110 configured to perform an agricultural task within an interaction zone 190 in the vicinity of the agricultural vehicle.

In the illustrated example, the agricultural implement 110 takes the form of a planter configured to plant crop (an example of an agricultural task) within the interaction zone. Here, the agricultural implement comprises a plurality of individual/separate planting units 111 (of which only one is visible in FIG. 1), a wheel 112 and planting apparatus 113. The planting apparatus may, for instance, comprise a hopper for the/each planting unit and/or machinery for controlling the operating of each planting unit. Each planting unit is configurable to plant crop. As used herein a "planter" is a machine for placing seeds in or on the ground and includes planters, seeders and seed drills.

However, embodiments of agricultural implements are not limited to planters. As another example, the agricultural implement may be a plough configured to plough or till (another example of an agricultural task) within the interaction zone. As yet another example, the agricultural implement may be a sprayer configured to apply fertilizer, pesticides, or other agricultural chemicals within the interaction zone. Furthermore, the agricultural vehicle may be a self-contained machine such as a self-propelled and/or fully automated planter. In scenarios where the agricultural vehicle is self-contained, the implement is incorporated into the vehicle. The agricultural vehicle may be a self-propelled and/or fully automated planter wherein the implement is the portion of the machine that places seeds in or on the ground.

In this context, an interaction zone 190 is the region or zone in the vicinity of the agricultural vehicle with which the agricultural implement interacts in order to perform the agricultural task. An alternative label for an interaction zone is a working area or working region of the agricultural vehicle.

It will be appreciated that the interaction zone 190 may vary in size and shape depending on the specific agricultural implement and task being performed. For example, in the case of a planter, the interaction zone may be a narrow strip of soil directly below, behind or beside the agricultural vehicle where seeds/plants are deposited. For a sprayer, the interaction zone may be a wider area extending outward from the sides of the vehicle where chemicals are dispersed.

The agricultural implement 110 may be fixedly secured to the remainder of the agricultural vehicle and/or removably connected thereto, e.g., by a hitch 115 or similar connecting mechanism, as illustrated in FIG. 1.

In particular, the agricultural vehicle 100 may comprise a propulsive component 105, such as a tractor, which is coupled to the agricultural implement 110. The propulsive component is configured to control the speed of movement and/or direction of movement of the agricultural vehicle, as is well established in the art.

In other examples, such as in a combine harvester or similar, the agricultural implement is fixedly secured or integrated with the propulsive component.

The proposed agricultural system provides a mechanism for controlling the operation of the agricultural implement. Accordingly, the agricultural implement is configured to have a controllable operation, appropriate examples of which will be given in their context in the following description. Nonetheless, it will be appreciated that the precise control of the agricultural implement may, for instance, depend upon the capabilities and/or controllably functionality of the agricultural implement.

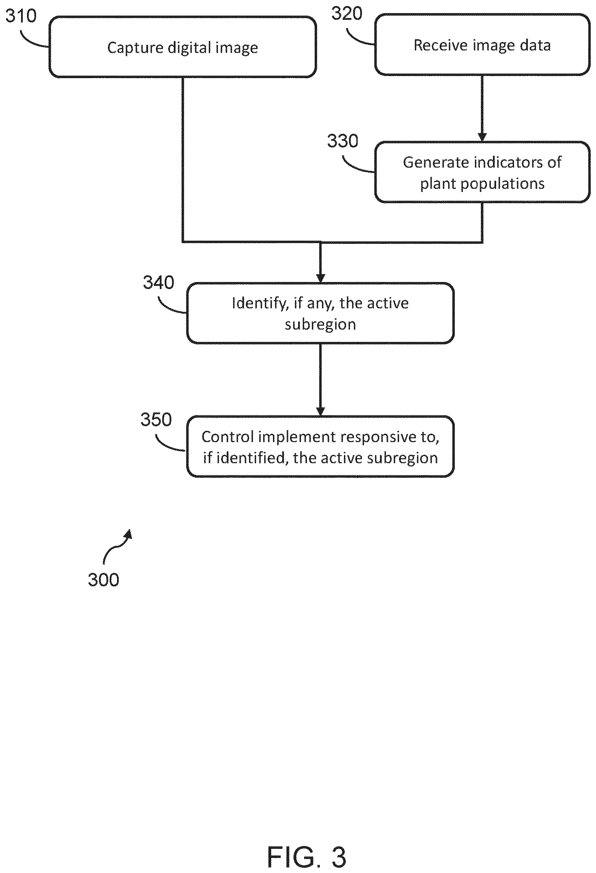

FIG. 3 is a flowchart illustrating a method 300 performed by the agricultural system. Continued reference will be made to FIGS. 1 and 2 where appropriate.

One or more acts of method 300 are performed by a control system, which is designed to control an operation or functionality of the implement of the agricultural vehicle. For instance, the control system may be configured to provide one or more control signals to the agricultural implement so as to control the function and/or operation of the agricultural implement.

The control system may be at least partially formed, e.g., entirely formed, on the agricultural vehicle. For instance, the agricultural vehicle may comprise or carry a control unit 130 that communicates with the agricultural implement to control the operation of the agricultural implement. The control unit 130 may form part or all of the control system.

In some examples, part of the control system is formed on the agricultural vehicle (e.g., in the form of the control unit 130), with another part formed in an external device (such as a cloud-computing system or similar). In such examples, the two parts may communicatively co-operative with one another to perform the functions of the relevant acts of the method.

The method 300 comprises an act 310 of using a vehicle tracking system to track a geographic location of the agricultural vehicle.

As one example, the vehicle tracking system may comprise a satellite-based geographic positioning system (e.g., a GPS-based system or a Galileo-based system) comprising at least one tracking element mounted to the agricultural vehicle. In such an approach, the tracking element may receive signals from a plurality of satellites and calculate the agricultural vehicles geographic location using well-known approaches.

As another example, the vehicle tracking system may comprise an Inertial Navigation System (INS), which employs accelerometers and/or gyroscopes to track the vehicle's position and orientation relative to a known starting point. This can be used in combination with a satellite-based geographic positioning system to accurately track the geographic location of the vehicle, even in areas of poor satellite coverage.

As another example, the vehicle's location may be determined using cellular network triangulation/multilateration, where the position of the vehicle is calculated based on signals received at or from multiple cellular towers at known locations.

In one cellular network triangulation/multilateration approach, sometimes known as Uplink Time Difference of Arrival (UTDOA), multiple cellular towers detect signals emitted by a transmitter carried by the agricultural vehicle. The strength and timing of these signals are measured at each tower. By comparing the differences in signal strength and arrival times at multiple towers, the system can calculate the vehicle's geographic location.

In another cellular network triangulation/multilateration approach, sometimes known as Observed Time Difference of Arrival (OTDOA), involves a receiver carried by the vehicle recording the time it takes for signals to arrive from different cellular towers. By comparing these timing differences and knowing the fixed locations of the towers, the system is able to calculate the vehicle's geographic location. This can be performed by a control unit 130 of the control system.

Other suitable approaches and corresponding systems for tracking the geographic location of the agricultural vehicle are known in the art, e.g., eLORAN or a radio navigation system. Any one or more of the approaches outlined above or otherwise known may be employed in performing act 320.

The method 300 also comprises an act 320 of receiving image data of an agricultural region to undergo an agricultural task. Act 320 is performed by the control system.

The image data may be generated by a satellite imaging system and/or an aerial photography image system. As such, the image data may comprise satellite imaging data and/or aerial photography data.

The image data is a digital representation of the agricultural region to undergo the agricultural task. In particular, the image data may comprise a digital image of the agricultural region in which the digital image comprises a plurality of pixels having one or more pixel values. Each pixel represents a different part of the agricultural region, with the pixel value(s) of said pixel representing an appearance of said part. The image data may, for instance, comprise visible light image data, infrared image data, ultraviolet image data and/or image data for any other wavelength of light.

The method 300 also comprises an act 330 of processing the image data to determine, for each of a plurality of subregions of the agricultural region, a respective indicator of plant population in said subregion. The act 330 is also performed by the control system.

The indicator of plant population may have a binary, categorical or numeric value. Thus, the indicator of plant population may be a binary, categorical, or numeric indicator of plant population.

A binary indicator may represent the presence or absence of plants in the subregion, such as "plants detected" or "no plants detected". As another example, the binary indicator may represent a relative density of plants in the subregion, such as "high density" or "low density", which may indicate whether or not a predicted density breaches a predetermined density threshold.

A categorical indicator may classify the plant population in the subregion into discrete categories, such as "low", "medium", or "high" density. This may, for instance, indicate into which of a plurality of density bands a plant density of the subregion falls.

A numeric indicator may provide a quantitative measure of plant population in the subregion, such as an estimated number of plants per unit area (i.e., a measure of plant density) or a percentage of ground cover. Thus, in some examples, the indicator of plant population is a measure of predicted plant density in the subregion.

One approach to performing act 330 could be to process the image data using a vegetation index algorithm designed to determine a vegetation index, such as the normalized difference vegetation index (NVDI) or the enhanced vegetation index (EVI), for different parts of the image data. This produces an index digital image having pixels with a value that represents the determined vegetation index. The vegetation index provides a numeric indicator of plant population.

In some examples of this approach, each pixel represents a different subregion of the agricultural region, and the corresponding pixel value (i.e., the vegetation index) functions as the indicator of plant population in said subregion.

In other examples of this approach, the index digital image is further processed to identify groups of pixels (e.g., segments of the index digital image) contiguously connected to one another and sharing similar vegetation indices. This may be performed using a segmentation algorithm, such as a blob detection algorithm. Each group of pixels represents a different subregion of the agricultural region. Within each group of pixels, the average vegetation index in that group may function as the indicator of plant population.

In a variant of this approach, the index digital image may undergo image segmentation to subdivide the area representing the agricultural region in the index digital image into a plurality of sub-areas, each representing a different subregion. This subdivision may be performed using a segmentation or edge detection technique to identify different subregions. Each subregion may then be processed using a vegetation index algorithm to determine an indicator of plant population for said subregion.

Examples of vegetation index algorithms are well known, such as those discussed in Gao, Lin, et al. "Remote sensing algorithms for estimation of fractional vegetation cover using pure vegetation index values: A review." ISPRS Journal of Photogrammetry and Remote Sensing 159 (2020): 364-377.

Another approach to performing act 330 is to process the image data using a (color) thresholding approach. In a color thresholding approach, the image data may be processed to identify areas of vegetation based on their color characteristics. This method typically involves setting specific color thresholds that correspond to the expected color range of plants.

The process may begin by, if required, converting the image data into a color space that separates vegetation from other elements more effectively, such as the HSV (Hue, Saturation, Value) color space. In this space, more dense vegetation may fall within a particular range of hue values, whereas less dense vegetation may take different hue values.

A threshold is applied to isolate pixels that fall within a predetermined range for vegetation. Pixels that meet the threshold criteria are classified as vegetation (i.e., "plants detected"), while those that do not are classified as non-vegetation (i.e., "no plants detected").

In some examples of this approach, each pixel represents a different subregion of the agricultural region, and the corresponding pixel classification functions as the indicator of plant population in said subregion.

In other examples of this approach, the index digital image is further processed to identify groups of pixels (e.g., segments of the index digital image) contiguously connected to one another and sharing similar classifications. This may be performed using a segmentation algorithm, such as a blob detection algorithm. Each group of pixels represents a different subregion of the agricultural region.

Another approach to performing act 330 is to process the image data using an appropriately trained machine-learning method. Thus, act 330 may comprise processing the image data using a machine-learning method to determine, for each of the plurality of subregions of the agricultural region, the respective indicator of plant population in said subregion.

By way of example, the machine-learning method may be trained to perform a dual task of image segmentation and indicator generation. Thus, act 330 may comprise using a machine-learning method to process image data to identify or segment a plurality of subregions and produce, for each subregion, a respective indicator of plant population in said subregion.

Suitable machine-learning methods include (artificial) neural networks, support vector machines (SVMs), Naïve Bayesian models and decision tree algorithms, although other appropriate examples will be apparent to the skilled person.

There are a number of well-established approaches for training a machine-learning method. One widely used learning approach is known as a supervised learning approach, which makes use of a large database of known input and output data. In such techniques, the machine-learning method is modified until an error between predicted output data, obtained by processing the input data with the machine-learning method, and the actual (known) output data is close to zero, i.e., until the predicted output data and the known output data converge. The value of this error is often defined by a cost function, which can be selected or defined by an appropriately skilled individual. The precise mechanism for modifying the machine-learning method depends upon the type of model. Example approaches for use with a neural network include gradient descent, backpropagation algorithms and so on.

It is not essential that the machine learning method(s) be trained by the control system. Rather, the machine-learning method(s) may be trained in advance of their usage (i.e., exploited for performing inference) by the control system. More specifically, the machine-learning method(s) may be trained by a dedicated training processing system, such as a cloud-based processing system, external to the agricultural vehicle. The trained machine-learning method(s) may be installed within the agricultural vehicle using any suitable or known means.

For use in the above-described approach, during training of the machine-learning method using a supervised learning technique, the known input data comprises example image data. The corresponding known output data comprises, for each instance of image data, annotated segments of the image data (each annotation providing the indicator of plant population in said segment). In particular, the indicator of plant population may be an indicator of a plant population of a specific/desired crop.

Other approaches for performing act 330 will be readily apparent to the skilled person.

The method 300 also comprises an act 340 of identifying, as an active subregion, in which, if any, of the plurality of subregions the tracked geographic location of the agricultural vehicle lies.

Act 340 can be trivially performed if the spatial relationship between the agricultural region (represented in the image data) and the tracked geographic location is known, e.g., they are defined in a same spatial co-ordinate system. To this end, it is noted that the global position of a region represented in image data, such as a satellite image or an aerial photograph image, is known or determinable when the image data is captured.

The skilled person will appreciate how image data of an agricultural region can be associated with location information to enable accurate tracking of the position of the agricultural vehicle with respect to the agricultural region. This association may be achieved through various methods. For instance, the image data may include geotags or metadata that specify the geographic coordinates of the area captured in each image. In other cases, the image data may be georeferenced using ground control points with known coordinates.

The control system may use this location information to align the image data with the tracked geographic location of the agricultural vehicle. This alignment allows the system to accurately and trivially determine which subregion of the agricultural region corresponds to the current location of the vehicle.

The method 300 also comprises an act 350 of, if an active subregion is identified, controlling the operation of the agricultural implement responsive to the respective indicator of plant population for the active subregion.

Thus, act 350 effectively comprises, when the agricultural vehicle is in the agricultural region, controlling the operation of the agricultural implement responsive to the indicator of plant population for the subregion (of the agricultural region) in which the agricultural vehicle is located.

In particular, the control system may be communicatively coupled to the agricultural implement so as to control and/or define an operation of the agricultural implement. For instance, the control system may be configured to provide one or more control signals to the agricultural implement so as to control the function and/or operation of the agricultural implement.

Act 350 may comprise, if an active subregion is identified, controlling whether or not the agricultural implement is activated responsive to the indicator of plant population in the active subregion. Thus, in some examples, the control system may be configured to control whether or not the agricultural implement is activated responsive to the indicator of plant population in the active subregion, if identified.

Act 350 may comprise activating the agricultural implement responsive to the indicator of plant population for the active subregion indicating that the plant population in the active subregion is below a first threshold population; and deactivating the agricultural implement responsive to the indicator of plant population for the active subregion indicating that the plant population in the active subregion is above the first threshold population.

This approach may be performed with binary, categorical, or numeric indicators of plant population.

For instance, for a binary indicator, act 350 may comprise activating the agricultural implement when the binary indicator takes a first value (e.g., representing a "low density" or "no plants detected" state), which corresponds to the plant population in the active subregion being below the first threshold population. Conversely, act 350 may comprise deactivating the implement when the indicator takes a second, different value (e.g., representing a "high density" or "plants detected" state), which corresponds to the plant population being above the first threshold population.

As another example, for a categorical indicator, act 350 may comprise activating the agricultural implement when the categorical indicator indicates a category of lower plant populations (e.g. "low" or "medium" density), which corresponds to the plant population in the active subregion being below the first threshold population. Act 350 may comprise deactivating the implement when the indicator indicates a category of lower plant populations (e.g. "high" density), which corresponds to the plant population in the active subregion being above the first threshold population.

As another example, for numeric indicators, act 350 may simply comprise comparing the numeric value directly to the first threshold population. It may activate the agricultural implement when the numeric indicator is below the first threshold population, and deactivate it when the indicator is above the first threshold population.

In each case, act 350 functions to interpret the indicator value in relation to the first threshold population to determine whether to activate or deactivate the agricultural implement dependent upon the indicator for the active subregion.

The foregoing approach provides a binary mechanism for controlling the operation of the agricultural implement (e.g., active or inactive) when the agricultural vehicle is in an active subregion. However, more granular control techniques may be used where the agricultural task performable using the agricultural implement is one with variable properties. In such scenarios, the control system may implement a variable rate application strategy, where the rate and/or amount of input application (e.g., seeds, plants, fertilizer, pesticides, ploughing size) performed by the agricultural implement is dynamically adjusted responsive to the indicator of plant population in the active subregion. For ease of explanation, the following examples are described under the assumption that the agricultural vehicle is in an active subregion.

A number of example control techniques performable when the agricultural implement comprises a planter are hereafter described.

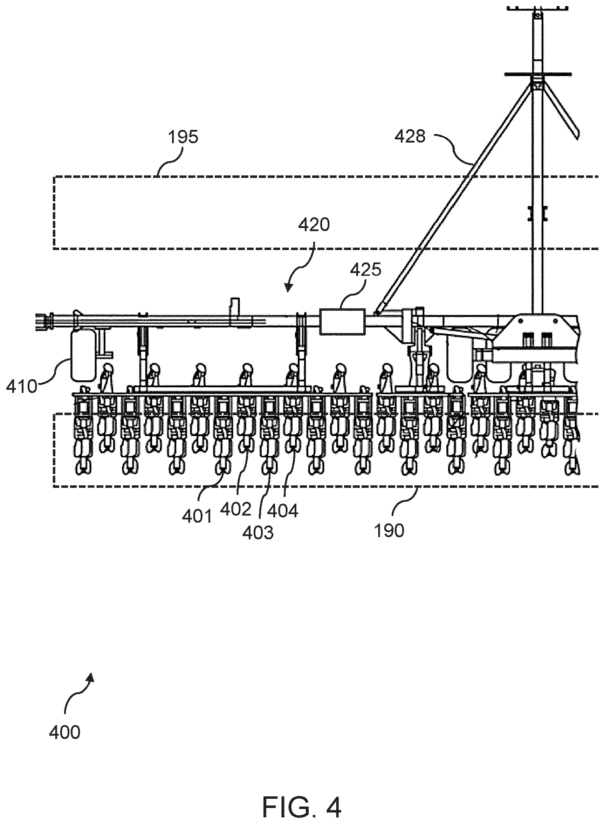

For improved contextual understanding, FIG. 4 illustrates a portion of an example planter 400. The planter 400 comprises a plurality of individual planting units 401, 402, 403, a wheel 410 and planting apparatus 420 for structurally supporting the planting unit(s) and/or controlling a position of the planting unit(s), as later described.

In some examples, act 350 comprises controlling a rate of crop planting performed by the agricultural implement responsive to the indicator of plant population in the active subregion, if identified, wherein the rate of crop planting is non-zero.

In particular, act 350 may be configured to control the rate of crop planting performed by the agricultural implement to be greater when the indicator of plant population in the active subregion, if identified, indicates a lower plant population than when the indicator of plant population in the active subregion, if identified, indicates a higher plant population (e.g., to reduce a risk of overcrowding).

One approach to controlling the rate of crop planting is to control the spacing between planted crop responsive to the indicator of plant population. For instance, in an active subregion with a higher existing plant density, act 350 may increase the spacing between newly planted crop to reduce competition for resources. In an active subregion with lower plant density, the spacing may be decreased to maximize land utilization.

Another approach to controlling the rate of crop planting is to control the number of active planting units 401, 402, 403, 404 within the planter 400. In particular, as illustrated in FIG. 4, a planter may comprise a plurality of individual planting units 401, 402, 403, 404, each configured to plant crop. Act 350 may be configured to control how many of these individual planting units are active responsive to the indicator of plant population in the active subregion, if identified.

Another approach to controlling the rate of crop planting is to adjust the rate at which individual planting units of the planter plant crop (e.g., modify the amount of crop seed/plant planted per unit time). In active subregions with lower existing plant density, a higher seeding/planting rate may be used to achieve a desired plant population. In active subregions with higher existing plant density, a lower seeding rate may be employed to prevent overcrowding.

In some examples, act 350 may comprise controlling the position at which the crop is planted with respect to the agricultural vehicle responsive to the indicator of plant population in the active subregion, if identified. The position at which the crop is planted may be defined as a lateral position with respect to the agricultural vehicle.

By way of example, act 350 may control the agricultural implement to plant the crop along one or more first predetermined lines defined with respect to the agricultural vehicle responsive to the indicator of plant population indicating that the plant population in the active subregion, if identified, is below a second threshold population; and plant the crop at one or more second predetermined lines defined with respect to the agricultural vehicle responsive to the indicator of plant population indicating that the plant population in the active subregion, if identified, is above a second threshold population, wherein each second predetermined line is offset from each first predetermined line.

The precise mechanism used by the agricultural implement to adjust the position(s) at which the crop is planted (responsive to a control by the control system) may be application-specific and is immaterial to the proposed approach.

Some example approaches are hereafter described. In the context of such approaches, it is noted that the agricultural implement may comprise a plurality of planting units 401, 402, 403, 404, which are laterally displaced from one another are each configured to plant crop and are each separately controllably responsive to control signals provided by the control system.

The agricultural implement 400, for instance the planting apparatus 420, may be equipped with one or more mechanisms 425 to shift the planting units side-to-side. For instance, the agricultural implement 400 may include a row unit shifter mechanism 425 that allows for lateral adjustment of individual planting units or groups of planting units. This mechanism may comprise one or more hydraulic cylinders, electric actuators, or mechanical linkages to move the planting units side-to-side relative to a main frame 428 of the implement. The control system may send signals to the row unit shifter 425 to adjust the lateral position of planting units responsive to the indicator of plant population.

In some examples, the control system may control which planting units are activated, such that a first set of agricultural units 401, 403 may be activated to plant crop along one or more first predetermined lines and a second set 402, 404 of agricultural units may be activated to plant crop along one or more second predetermined lines. In this approach, the planting units are laterally displaced from one another. Thus, in this approach, the control system is able to selectively activate or deactivate specific planting units to plant crop along desired predetermined lines responsive to the plant population indicator.

Each first predetermined line may be a line along which existing crop was planted. Thus, the agricultural vehicle may store or retrieve planting information that identifies where crop was initially planted (e.g., with respect to a path of the agricultural vehicle) during an earlier planting procedure. The control system may access this stored planting data to determine the first predetermined lines corresponding to existing crop rows.

This reduces a risk that new crop will overplant existing crop when there is sufficient crop population. By planting along the first predetermined lines when the plant population is below the second threshold, the system may fill in gaps or areas of low density in existing crop rows. When the plant population is above the second threshold, planting along offset second predetermined lines helps avoid overcrowding and competition for resources.

In some cases, act 350 may be configured to perform more granular positioning control responsive to the indicator of plant population in the active subregion, if identified. For example, the lateral offset of the second predetermined lines from the first predetermined lines may be variable and proportional to the detected plant density. A higher detected density may result in a larger lateral offset to provide more space between existing and newly planted crops.

It is noted that the crop planted by the planter may differ from the existing crop for which the indicator of plant population is determined.

For instance, the planted crop may be a faster-growing variant of the existing crop, which could allow for more efficient use of the growing season or enable both the existing crop and the newly planted crop to be mature at a same time so that it may be harvested at a same time.

As another example, the planted crop may be a different cultivar or hybrid of the same species as the existing crop, e.g., selected for specific traits such as disease resistance, drought tolerance, or improved nutritional content. Alternatively, the planted crop could be an entirely different species chosen to complement the existing crop in a companion planting or crop rotation strategy.

For the sake of completeness, some approaches that may be exploited by the control system to perform act 350 to control agricultural implements that are able to perform other agricultural tasks are hereafter described.

By way of example, when the agricultural implement comprises a sprayer, then act 350 may be configured to, when the agricultural vehicle is determined to be in an active subregion, control the rate or amount of spraying performed by the agricultural implement responsive to the indicator of plant population in the active subregion. For instance, the control system may adjust the flow rate of sprayed materials (e.g., fertilizers, pesticides, herbicides) responsive to the indicator of plant population. In areas with higher plant density, the system may increase the spray rate to ensure adequate coverage of the denser vegetation. Conversely, in areas with lower plant density, the spray rate may be reduced to avoid over-application and potential waste of resources.

As another example, when the agricultural implement comprises a sprayer, then act 350 may be configured to, when the agricultural vehicle is determined to be in an active subregion, adjust the spray pattern or nozzle configuration of the sprayer responsive to the plant population indicator. For example, in active subregions of higher plant density, the system may activate additional spray nozzles or adjust the spray pattern to provide more thorough coverage. In active subregions of lower plant density, fewer nozzles may be activated, or the spray pattern may be modified for lower plant densities.

As another example, when the agricultural implement comprises a sprayer, then act 350 may be configured to, when the agricultural vehicle is determined to be in an active subregion, modify the composition or type of material being sprayed responsive to the plant population indicator. For instance, in an active subregion with higher plant density, a different fertilizer blend or pesticide formulation may be applied compared to active subregions with lower plant density, to address the specific needs of the crop in those different conditions.

When the agricultural implement comprises a plough or other tillage tool, act 350 may adjust the ploughing/tillage depth, intensity, or pattern responsive to the plant population indicator. In an active subregion with higher plant density, act 350 may increase tillage depth or intensity to manage increased crop residue. In an active subregion with lower plant density, tillage may be less aggressive to preserve soil structure and moisture.

As yet another example, when the agricultural implement comprises a harvester, act 350 may adjust one or more harvesting parameters responsive to the plant population indicator. In an active subregion with higher plant density, act 350 may increase the speed of the harvester's cutting or threshing mechanisms to handle the increased volume of plant material. Conversely, in an active subregion with lower plant density, the harvesting speed may be reduced to ensure thorough collection of available crops.

Of course, a combination of any of the above described approaches for controlling the operation of the agricultural implement may be used. The above described approaches are not considered to be exhaustive, and other examples will be apparent to the skilled person.

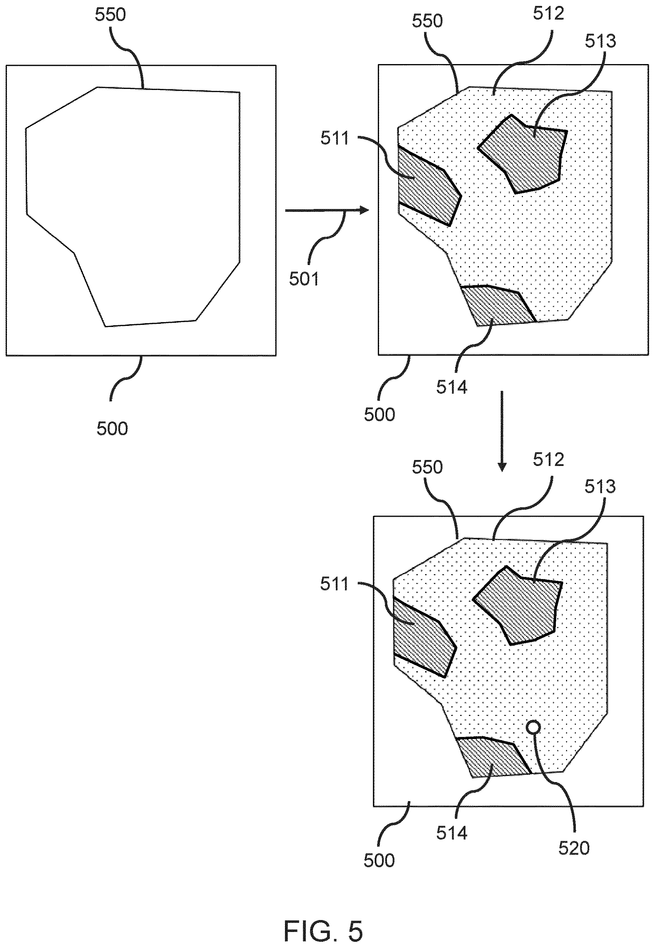

FIG. 5 conceptually illustrates a proposed approach for improved understanding.

The proposed approach receives image data 500 of an agricultural region 550. The image data may, for instance, comprise a digital image (such as a satellite image) of the agricultural region.

The proposed approach also processes 501 the image data 500 to determine, for each of a plurality of subregions 511, 512, 513, 514 of the agricultural region, a respective indicator of plant population in said subregion. This is illustrated in FIG. 5 using different patterns for the illustrated subregions.

The proposed approach also tracks a geographic location 520 of the agricultural vehicle. This geographic location is definable or mappable to locations or positions with respect to the agricultural region. This can be trivially achieved if the geographic location of the agricultural region is known, which can be derived from satellite position data, based on positional metadata in the image data and/or by georeferencing using ground control points with known coordinates.

The proposed approach also proposes to identify which, if any active subregion 512 the tracked geographic location 520 of the agricultural vehicle lies. If an active subregion is identified, it is proposed to control the operation of the agricultural implement responsive to the respective indicator of plant population for the active subregion.

Embodiments described herein make use of a control system that may be implemented through various combinations of software and hardware to execute the required functionalities. One implementation may involve a processor-based control system, where one or more microprocessors are programmed with software (such as microcode) to carry out the necessary functions. However, the control system is not limited to processor-based implementations. It may be realized without processors or as a hybrid system combining purpose-built hardware for certain tasks with processors (e.g., programmed microprocessors and their associated circuits) for other functions.

The control system may incorporate various components in different embodiments of this disclosure. These components may include, but are not restricted to, standard microprocessors, application-specific integrated circuits (ASICs), and field-programmable gate arrays (FPGAs).

In some examples, the control system comprises at least one processor; and at least one memory carrying instructions that, when executed by the at least one processor, cause the at least one processor to carry out the functions of the herein proposed control system.

It will be understood that disclosed methods are preferably computer-implemented methods. As such, there is also proposed the concept of a computer program comprising code means for implementing any described method when said program is run on a control system, such as a computer. Thus, different portions, lines or blocks of code of a computer program according to an embodiment may be executed by a control system or computer to perform any herein described method.

A computer program may be stored on a computer-readable medium, itself an embodiment of the disclosure. A "computer-readable medium" is any suitable mechanism or format that can store a program for later processing by a control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural system comprising:
an agricultural vehicle having an agricultural implement configured to perform an agricultural task within an interaction zone in the vicinity of the agricultural vehicle;
a vehicle tracking system configured to track a geographic location of the agricultural vehicle;
a control system configured to:
receive image data of an agricultural region to undergo an agricultural task;
process the image data to determine, for each of a plurality of subregions of the agricultural region, a respective indicator of plant population in said subregion;
identify, as an active subregion, in which, if any, of the plurality of subregions the tracked geographic location of the agricultural vehicle lies; and
if an active subregion is identified, control the operation of the agricultural implement responsive to the respective indicator of plant population for the active subregion.

2. The agricultural system of claim 1, wherein the image data comprises satellite imaging data and/or aerial photography data.

3. The agricultural system of any one of claims 1 or 2, wherein the control system is configured to, if an active subregion is identified, control whether or not the agricultural implement is activated responsive to the respective indicator of plant population for the active subregion.

4. The agricultural system of claim 3, wherein the control system is configured to, if an active subregion is identified:
activate the agricultural implement responsive to the indicator of plant population for the active subregion indicating that the plant population in the active subregion is below a first threshold population; and
deactivate the agricultural implement responsive to the indicator of plant population for the active subregion indicating that the plant population in the active subregion is above the first threshold population.

5. The agricultural system of any one of claims 1 to 4, wherein each indicator of plant population is a measure of predicted plant density in the respective subregion.

6. The agricultural system of any one of claims 1 to 5, wherein the control system is configured to process the image data using a machine-learning method to determine, for each of the plurality of subregions of the agricultural region, the respective indicator of plant population in said subregion.

7. The agricultural system of any one of claims 1 to 6, wherein the agricultural implement is a planter configured to plant crop.

8. The agricultural system of claim 7, wherein the control system is configured to control, if an active subregion is identified and the agricultural implement is activated, a rate of crop planting performed by the agricultural implement responsive to the indicator of plant population in the active subregion, wherein the rate of crop planting is non-zero.

9. The agricultural system of claim 8, wherein the control system is configured to control, if an active subregion is identified:
the rate of crop planting performed by the agricultural implement to be greater when the indicator of plant population for the active subregion indicates a lower plant population than when the indicator of plant population for the active subregion indicates a higher plant population.

10. The agricultural system of any one of claims 7 to 9, wherein the control system is configured to control, if an active subregion is identified, the position at which the crop is planted with respect to the agricultural vehicle responsive to the indicator of plant population for the active subregion.

11. The agricultural system of claim 10, wherein the control system is configured to, if an active subregion is identified and the agricultural implement is activated:
plant the crop along one or more first predetermined lines defined with respect to the agricultural vehicle responsive to the indicator of plant population for the active subregion indicating that the plant population in the active subregion is below a second threshold population; and
plant the crop at one or more second predetermined lines defined with respect to the agricultural vehicle responsive to the indicator of plant population for the active subregion indicating that the plant population in the active subregion is above a second threshold population, wherein each second predetermined line is offset from each first predetermined line.

12. The agricultural system of claim 11, wherein each first predetermined line is a line along which existing crop was planted.

13. The agricultural system of any one of claims 1 to 12, wherein the vehicle tracking system comprises a satellite-based geographic positioning system comprising at least one tracking element mounted to the agricultural vehicle.

14. The agricultural system of any one of claims 1 to 13, wherein the plant population is a crop population.

15. A method for controlling an agricultural implement, of an agricultural vehicle, configured to perform an agricultural task within an interaction zone in the vicinity of the agricultural vehicle, the method comprising:
tracking a geographic location of the agricultural vehicle;
receiving image data of an agricultural region to undergo an agricultural task;
processing the image data to determine, for each of a plurality of subregions of the agricultural region, a respective indicator of plant population in said subregion;
identifying, as an active subregion, which, if any, of the plurality of subregions the tracked geographic location of the agricultural vehicle lies; and
if an active subregion is identified, controlling the operation of the agricultural implement responsive to the respective indicator of plant population for the active subregion.
